# EUROPÄISCHE PATENTSCHRIFT

(11) **EP 2 950 040 B1**
(45) Veröffentlichungstag und Bekanntmachung des Hinweises auf die Patenterteilung: **08.11.2017**
(21) Anmeldenummer: 15000869.6
(22) Anmeldetag: 24.03.2015
(51) Int. Cl.: G01B 11/00, B62D 13/06

(54) **VERFAHREN ZUR UNTERSTÜTZUNG EINES FAHRERS EINES NUTZFAHRZEUG-GESPANNS UND NUTZFAHRZEUG-GESPANN MIT EINEM FAHRERASSISTENZSYSTEM**
METHOD FOR SUPPORTING A DRIVER OF A COMMERCIAL VEHICLE COMBINATION AND COMMERCIAL VEHICLE COMBINATION WITH A DRIVER ASSISTANCE SYSTEM
PROCÉDÉ D'ASSISTANCE DU CONDUCTEUR D'UN ENSEMBLE ATTELÉ DE VÉHICULE UTILITAIRE ET VÉHICULE UTILITAIRE AVEC UN SYSTÈME D'ASSISTANCE

(30) Priorität: 27.05.2014 DE 102014007898
(43) Veröffentlichungstag der Anmeldung: 02.12.2015
(73) Patentinhaber: MAN Truck & Bus AG, 80995 München (DE)
(72) Erfinder: Römersperger, Xaver, 81543 München (DE); Dörner, Karlheinz, 85757 Karlsfeld (DE); Schwertberger, Walter, 82278 Althegnenberg (DE); Kraus, Sven, 85748 Garching (DE); Reule, Michael, 85354 Freising (DE); Völl, Sebastian, 85221 Dachau (DE)
(74) Vertreter: Liebl, Thomas

(56) Entgegenhaltungen:
- WO-A1-2008/064892
- DE-A1-102005 042 957
- JP-A- 2001 334 966

## Beschreibung

Die Erfindung betrifft ein Verfahren zur Unterstützung eines Fahrers eines Nutzfahrzeug-Gespanns nach dem Oberbegriff des Patentanspruches 1, ein Fahrerassistenzsystem zur Unterstützung eines Fahrers eines Nutzfahrzeug-Gespanns nach dem Oberbegriff des Patentanspruches 12 sowie ein Nutzfahrzeug zur Durchführung des Verfahrens und/oder mit dem Fahrerassistenzsystem nach Patentanspruch 15.

Moderne Nutzfahrzeuge weisen regelmäßig eine Reihe von Fahrerassistenzsystemen auf, mittels denen ein Fahrer des Nutzfahrzeuges unterstützt werden kann. Diese Fahrerassistenzsystem sind dabei häufig derart ausgebildet, dass nützliche Informationen an den Fahrer des Nutzfahrzeuges ausgegeben werden.

Aus der DE 10 2005 042 957 A1 ist ein Verfahren zur Ermittlung statischer und dynamischer Kenngrößen eines Gliederzugs bekannt. Eine der statischen Kenngrößen ist beispielhaft die Breite eines Anhängers des Gliederzugs, eine der dynamischen Kenngrößen beispielhaft der relative Gierwinkel zwischen einem Zugfahrzeug des Gliederzugs und dem Anhänger. Die Ermittlung des relativen Gierwinkels macht es beispielsweise möglich, einen Fahrer des Gliederzugs beim Rückwärtsfahren zu unterstützen oder gegebenenfalls sogar das Rückwärtsfahren vollständig zu automatisieren. Für die Bestimmung des relativen Gierwinkels werden zunächst mittels eines zugfahrzeugseitigen Laserscanners Entfernungen zu Messpunkten an einer dem Zugfahrzeug zugewandten Vorderseite des Anhängers ermittelt und die Position einer durch die Messpunkte verlaufenden Ausgleichsgerade bestimmt. Mittels der Position der Ausgleichsgerade und definierter geometrischer Berechnungen kann dann der relative Gierwinkel zwischen dem Zugfahrzeug und dem Anhänger ermittelt werden.

Aufgabe der Erfindung ist es, ein Verfahren und/oder ein Fahrerassistenzsystem zur Unterstützung eines Nutzfahrzeug-Gespanns bereitzustellen, mittels dem bzw. denen wenigstens eine statische und/oder wenigstens eine dynamische Kenngröße des Nutzfahrzeug-Gespanns auf einfache Weise ermittelt werden kann bzw. können.

Diese Aufgabe wird durch die Merkmale der unabhängigen Ansprüche gelöst. Bevorzugte Weiterbildungen sind in den Unteransprüchen offenbart.

Die Erfindung betrifft ein Verfahren zur Unterstützung eines Fahrers eines Nutzfahrzeug-Gespanns, wobei ein Zugfahrzeug des Nutzfahrzeug-Gespanns eine optische Messeinrichtung, insbesondere einen Laserscanner, aufweist, mittels der die Position wenigstens einer auf einer, in Fahrzeug-Längsrichtung gesehen, vorderen Kopffläche eines Anhängers/Aufliegers des Nutzfahrzeug-Gespanns abbildbaren Messgerade ermittelt wird. Aus der Position der Messgerade wird wenigstens eine statische und/oder dynamische Kenngröße des Nutzfahrzeug-Gespanns ermittelt. Die Außenkontur der Kopffläche ist dabei im Wesentlichen rechteckförmig bzw. rechteckig ausgebildet.

Erfindungsgemäß wird die Messgerade parallel oder kongruent zur wenigstens einer in Fahrzeug-Querrichtung verlaufenden Querkante, insbesondere Oberkante und/oder Unterkante, der Kopfflächen-Außenkontur ausgerichtet, um die Breite des Anhängers/Aufliegers und/oder den relativen Gierwinkel zwischen Zugfahrzeug und Anhänger/Auflieger zu ermitteln.

Alternativ und/oder zusätzlich wird die Messgerade parallel oder kongruent zu wenigstens einer in Fahrzeug-Hochrichtung verlaufenden Hochkante, insbesondere Seitenkante, der Kopfflächen-Außenkontur ausgerichtet, um die Höhe des Anhängers/Aufliegers zu ermitteln.

Weiter alternativ und/oder zusätzlich wird die Messgerade derart ausgerichtet, dass sie sowohl eine Querkante als auch eine Hochkante der Kopfflächen-Außenkontur schneidet, um den relativen Gierwinkel zwischen Zugfahrzeug und Anhänger/Auflieger und/oder die Höhe des Anhängers/Aufliegers und/oder die Breite des Anhängers/Aufliegers zu ermitteln.

Durch die spezielle(n) Ausrichtung(en) der Messgerade kann bzw. können die Breite des Anhängers/Aufliegers, die Höhe des Anhängers/Aufliegers und/oder der relative Gierwinkel zwischen Zugfahrzeug und Anhänger/Auflieger besonders einfach ermittelt werden, da die Berechnungen zur Ermittlung dieser Kenngrößen deutlich vereinfacht werden. Die ermittelten Kenngrößen können dann beispielsweise an den Fahrer des Nutzfahrzeug-Gespanns ausgegeben werden, um diesen stets über diese Kenngrößen zu informieren.

Die Ausrichtung der Messgerade derart, dass sie sowohl eine Querkante als auch eine Hochkante der Kopfflächen-Außenkontur schneidet, ermöglicht dabei eine kombinierte bzw. gleichzeitige Ermittlung von sowohl der Breite des Anhängers/Aufliegers, der Höhe des Anhängers/Aufliegers als auch des relativen Gierwinkels zwischen Zugfahrzeug und Anhänger/Auflieger mit nur einer einzigen Messgerade. So können diese Kenngrößen besonders einfach, insbesondere mit nur einer einzelnen Messeinrichtung und ohne Neu-Justierung dieser Messeinrichtung während der Messung, und auch besonders schnell ermittelt werden.

Vorzugsweise wird die, eine Querkante als auch eine Hochkante schneidende Messgerade derart ausgerichtet, dass ein auf die vordere Kopffläche des Anhängers/Aufliegers abgebildeter Bereich der Messgerade besonders lang ist. Dadurch kann bzw. können der relative Gierwinkel zwischen Zugfahrzeug und Anhänger/Auflieger und/oder die Höhe des Anhängers/Aufliegers und/oder die Breite des Anhängers/Aufliegers mit besonders hoher Genauigkeit ermittelt werden.

Wird die Messgerade derart ausgerichtet, dass sie sowohl eine Querkante als auch eine Hochkante der Kopfflächen-Außenkontur schneidet, können in einer bevorzugten Verfahrensführung mittels der optischen Messeinrichtung wenigstens mit einer definierten Abweichung die Positionen wenigstens zweier Messpunkte auf der Messgeraden, insbesondere die Positionen der Schnittpunkte zwischen der Querkante und der Messgerade sowie zwischen der Hochkante und der Messgerade, ermittelt werden. Aus dem geometrischen Zusammenhang der Positionen der wenigstens zwei Messpunkte und der Position bzw. Ausrichtung der optischen Messeinrichtung am Zugfahrzeug kann dann der relative Gierwinkel zwischen Zugfahrzeug und Anhänger/Auflieger ermittelt werden. Konkret kann zur Ermittlung des relativen Gierwinkels dabei aus den Positionsdaten der wenigstens zwei Messpunkte beispielsweise der Winkel der Messgerade relativ zu einer durch Zugfahrzeug-Querachse und Zugfahrzeug-Hochachse gebildeten Vertikalebene berechnet werden.
Wird die Messgerade derart ausgerichtet, dass sie sowohl eine, in Fahrzeug-Hochrichtung gesehen, obere Querkante als auch eine Hochkante der Kopfflächen-Außenkontur schneidet, kann alternativ und/oder zusätzlich mittels der optischen Messeinrichtung wenigstens mit einer definierten Abweichung die Position eines oberen Schnittpunktes zwischen der oberen Querkante und der Messgerade ermittelt werden. Aus dem geometrischen Zusammenhang des relativen Gierwinkels, der Position des oberen Schnittpunktes und der Position der optischen Messeinrichtung am Zugfahrzeug kann dann die Höhe des Anhängers/Aufliegers ermittelt werden.

Wird die Messgerade derart ausgerichtet, dass sie sowohl eine Querkante als auch eine Hochkante der Kopfflächen-Außenkontur schneidet, kann weiter alternativ und/oder zusätzlich mittels der optischen Messeinrichtung wenigstens mit einer definierten Abweichung die Position eines seitlichen Schnittpunktes zwischen einer Hochkante und der Messgerade ermittelt werden. Aus dem geometrischen Zusammenhang des relativen Gierwinkels, der Position des seitlichen Schnittpunktes und der Position der optischen Messeinrichtung am Zugfahrzeug kann dann die Breite des Anhängers/Aufliegers ermittelt werden.

Wird die Messgerade parallel oder kongruent zu wenigstens einer Querkante der Kopfflächen-Außenkontur ausgerichtet, kann bevorzugt mittels der optischen Messeinrichtung wenigstens mit einer definierten Abweichung die Positionen der beiden seitlichen Schnittpunkte zwischen den beiden Hochkanten und der Messgerade ermittelt werden. Aus dem geometrischen Zusammenhang der Positionen der beiden seitlichen Schnittpunkte und der Position der optischen Messeinrichtung am Zugfahrzeug kann dann die Breite des Anhängers/Aufliegers ermittelt werden.

Alternativ und/oder zusätzlich kann mittels der optischen Messeinrichtung wenigstens mit einer definierten Abweichung die Position wenigstens zweier Messpunkte auf der Messgerade ermittelt werden, wenn die Messgerade parallel oder kongruent zu wenigstens einer Querkante der Kopfflächen-Außenkontur ausgerichtet wird. Aus dem geometrischen Zusammenhang der Positionen der beiden Messpunkte und der Position der optischen Messeinrichtung am Zugfahrzeug kann dann der relative Gierwinkel zwischen Zugfahrzeug und Anhänger/Auflieger ermittelt werden. Bevorzugt können dabei zwei Messpunkte derart angeordnet sein, dass sie die beiden seitlichen Schnittpunkte zwischen den beiden Hochkanten der Kopfflächen-Außenkontur und der Messgerade ausbilden, um den relativen Gierwinkel mit einer besonders hohen Genauigkeit zu bestimmen.

Wird die Messgerade parallel oder kongruent zu wenigstens einer Hochkante der Kopfflächen-Außenkontur ausgerichtet, kann bevorzugt mittels der optischen Messeinrichtung mit einer definierten Abweichung die Position eines oberen Schnittpunktes zwischen einer, in Fahrzeug-Hochrichtung gesehen, oberen Querkante und der Messgerade ermittelt werden. Aus dem geometrischen Zusammenhang der Position des oberen Schnittpunktes und der Position der optischen Messeinrichtung am Zugfahrzeug kann dann die Höhe des Anhängers/Aufliegers ermittelt werden.

In einer bevorzugten Verfahrensführung kann mittels der optischen Messeinrichtung die Positionen wenigstens zweier Messpunkte an der Kopffläche des Anhängers/Aufliegers ermittelt werden. Die Messpunkte sind dabei derart angeordnet, dass mittels diesen zumindest mit einer definierten Abweichung die wenigstens eine Messgerade approximiert und/oder ausgebildet werden kann. Auf diese Weise kann die Messgerade besonders einfach definiert und die Position der Messgerade besonders einfach ermittelt werden. Bevorzugt kann die Messgerade mittels des RANSAC-Verfahrens und/oder mittels eines Verfahrens der linearen Regression approximiert werden, um die Messgerade einfach und mit ausreichender Genauigkeit Weise anzunähern.

Bevorzugt kann jeder Hochkante des Anhängers/Aufliegers jeweils ein Messpunkt zugeordnet sein, um die Messgerade mit einer besonders hohen Genauigkeit zu approximieren und/oder auszubilden. Alternativ und/oder zusätzlich kann auch jeder Querkante des Anhängers/Aufliegers jeweils ein Messpunkt zugeordnet sein. Weiter alternativ und/oder zusätzlich kann einer Hochkante des Anhängers/Aufliegers und einer Querkante des Aufhängers/Aufliegers jeweils ein Messpunkt zugeordnet sein.

Vorzugsweise kann wenigstens ein Messpunkt der optischen Messeinrichtung in einem definierten Nahbereich nahe an einer Hochkante des Anhängers/Aufliegers angeordnet sein. Durch diesen Messpunkt wird dann ein Schnittpunkt zwischen der Hochkante des Anhängers/Aufliegers und der Messgerade approximiert. Dadurch kann der Schnittpunkt zwischen der Hochkante des Anhängers/Aufliegers und der Messgerade besonders einfach und mit ausreichender Genauigkeit approximiert werden.

Alternativ und/oder zusätzlich kann wenigstens ein Messpunkt der optischen Messeinrichtung in einem definiertem Nahbereich nahe an einer Querkante des Anhängers/Aufliegers angeordnet sein. Durch diesen Messpunkt kann dann der Schnittpunkt zwischen der Querkante des Anhängers/Aufliegers und der Messgerade approximiert werden.

Ferner wird zur Lösung der bereits genannten Aufgabenstellung ein Fahrerassistenzsystem zur Unterstützung eines Fahrers eines Nutzfahrzeug-Gespanns vorgeschlagen, wobei ein Zugfahrzeug des Nutzfahrzeug-Gespanns eine optische Messeinrichtung, insbesondere einen Laserscanner, aufweist, mittels der wenigstens eine Messgerade auf einer, in Fahrzeug-Längsrichtung gesehen, vorderen Kopffläche eines Anhängers/Aufliegers des Nutzfahrzeug-Gespanns abgebildet und die Position der Messgerade ermittelt werden kann. Mittels einer Datenverarbeitungseinrichtung kann aus der Position der Messgerade wenigstens eine statische und/oder dynamische Kenngröße des Nutzfahrzeug-Gespanns ermittelt werden. Eine Außenkontur der Kopffläche des Anhängers/Aufliegers ist dabei im Wesentlichen rechteckförmig bzw. rechteckig ausgebildet.

Erfindungsgemäß ist die optische Messeinrichtung derart ausgebildet und/oder anordenbar, dass die Messgerade parallel oder kongruent zu wenigstens einer im Fahrzeug-Querrichtung verlaufenden Querkante, insbesondere Oberkante und/oder Unterkante, die Kopfflächen-Außenkontur ausgerichtet werden kann, um mittels der Datenverarbeitungseinrichtung die Breite des Anhängers und/oder den relativen Gierwinkel zwischen Zugfahrzeug und Anhänger/Auflieger zu ermitteln.

Alternativ und/oder zusätzlich kann die optische Messeinrichtung derart ausgebildet und/oder anordenbar sein, dass die Messgerade parallel und/oder kongruent zu wenigstens einer in Fahrzeug-Hochrichtung verlaufenden Hochkante, insbesondere Seitenkante, der Kopfflächen-Außenkontur ausgerichtet werden kann, um mittels der Datenverarbeitungseinrichtung die Höhe des Anhängers/Aufliegers zu ermitteln.

Weiter alternativ und/oder zusätzlich kann die optische Messeinrichtung derart ausgebildet und/oder anordenbar sein, dass die Messgerade sowohl eine Querkante als auch eine Hochkante der Kopfflächen-Außenkontur schneidet, um mittels der Datenverarbeitungseinrichtung den relativen Gierwinkel zwischen Zugfahrzeug und Anhänger und/oder die Höhe des Anhängers/Aufliegers und/oder die Breite des Anhängers/Aufliegers zu ermitteln.

Die sich durch das erfindungsgemäße Fahrerassistenzsystem ergebenden Vorteile sind identisch mit den bereits gewürdigten Vorteilen des erfindungsgemäßen Verfahrens, so dass diese an dieser Stelle nicht wiederholt werden.

In einer bevorzugten Ausführung des erfindungsgemäßen Fahrerassistenzsystems können die optische Messeinrichtung und die Datenverarbeitungseinrichtung derart ausgebildet sein, dass mittels diesen ein Winkel zwischen der Messgerade und einer Querkante der Kopfflächen-Außenkontur und/oder wenigstens mit einer definierten Abweichung die Position eines oberen Schnittpunktes zwischen einer, in Fahrzeug-Hochrichtung gesehen, oberen Querkante der Kopfflächen-Außenkontur und der Messgerade und/oder wenigstens mit einer definierten Abweichung die Position eines, in Fahrzeug-Querrichtung gesehen, seitlichen Schnittpunktes zwischen einer Hochkante der Kopfflächen-Außenkontur und der Messgerade ermittelt werden können. Dadurch können die Breite des Anhängers/Aufliegers, die Höhe des Anhängers/Aufliegers und/oder der relative Gierwinkel zwischen Zugfahrzeug und Anhänger/Auflieger besonders einfach ermittelt werden.

In einer bevorzugten konkreten Ausführung kann die optische Messeinrichtung ein Ein-Zeilen-Laserscanner sein, um die Position der Messgerade auf besonders kostengünstige Weise ermitteln zu können. Alternativ kann die optische Messeinrichtung auch ein Mehr-Zeilen-Laserscanner sein, um, beispielsweise durch eine Mittelung der Berechnungsergebnisse, die statischen und/oder dynamischen Kenngrößen mit einer besonders hohen Genauigkeit zu ermitteln. Hierzu können alternativ auch mehrere Ein-Zeilen-Laserscanner vorgesehen sein.

Konkret kann bei der Ausbildung der optischen Messeinrichtung als Ein- oder Mehr-Zeilen-Laserscanner die Messgerade beispielsweise durch gezielte Positionierung des Laserscanners an dem Zugfahrzeug und gezielte Ausrichtung des Laserscanners bzw. der Messebene(n) des Laserscanners wie gewünscht ausgerichtet werden. Die bereits erwähnte vorteilhafte Anordnung von Messpunkten im Bereich der Hochkanten und/oder Querkanten der Kopffläche kann bei der Ausbildung der optischen Messeinrichtung als Ein- oder Mehr-Zeilen-Laserscanner beispielsweise dadurch erreicht bzw. realisiert werden, dass die Messebene(n) im Bereich der Kopffläche ausreichend breit ist bzw. sind und mit einer hohen Anzahl von Messpunkten in der jeweiligen Messebene eine besonders feine Abtastung der Kopffläche sichergestellt wird.

Weiter bevorzugt kann die optische Messeinrichtung, in Fahrzeug-Längsrichtung gesehen, derart nach hinten ausgerichtet sein, dass mittels dieser Positionen wenigstens zweier Messpunkte an der Kopffläche des Anhängers/Aufliegers ermittelt werden können, wobei die Messpunkte derart angeordnet sind, dass mittels diesen zumindest mit einer definierten Abweichung die wenigstens eine Messgerade approximiert und/oder ausgebildet werden kann. Mittels der wenigstens zwei Messpunkte kann die Messgerade besonders einfach und mit einer ausreichenden Genauigkeit approximiert und/oder ausgebildet werden.

Ferner wird ein Nutzfahrzeug zur Durchführung des erfindungsgemäßen Verfahrens und/oder mit dem erfindungsgemäßen Fahrerassistenzsystem beansprucht. Die sich daraus ergebenden Vorteile sind identisch mit den bereits gewürdigten Vorteilen des erfindungsgemäßen Verfahrens und/oder des erfindungsgemäßen Fahrerassistenzsystems, so dass diese an dieser Stelle nicht wiederholt werden.

Die vorstehend erläuterten und/oder in den Unteransprüchen wiedergegebenen vorteilhaften Aus- und/oder Weiterbildungen der Erfindung können, außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer schematischen Ansicht von oben ein erfindungsgemäßes Nutzfahrzeug-Gespann;
- Fig. 2: eine Darstellung gemäß Fig. 1, anhand der Messungen mittels eines Laserscanners des Nutzfahrzeug-Gespanns erläutert werden;
- Fig. 3: das Nutzfahrzeug-Gespann mit dem Laserscanner in einer ersten speziellen Ausrichtung;
- Fig. 4: das Nutzfahrzeug-Gespann mit dem Laserscanner in einer zweiten speziellen Ausrichtung;
- Fig. 5: das Nutzfahrzeug-Gespann mit dem Laserscanner in einer dritten speziellen Ausrichtung;
- Fig. 6: Messergebnisse des Laserscanners mit dem Laserscanner in seiner ersten speziellen Ausrichtung;
- Fig. 7: Messergebnisse des Laserscanners mit dem Laserscanner in seiner dritten speziellen Ausrichtung; und
- Fig. 8: eine Darstellung von Messpunkten des Laserscanners mit dem Laserscanner in seiner dritten speziellen Ausrichtung.

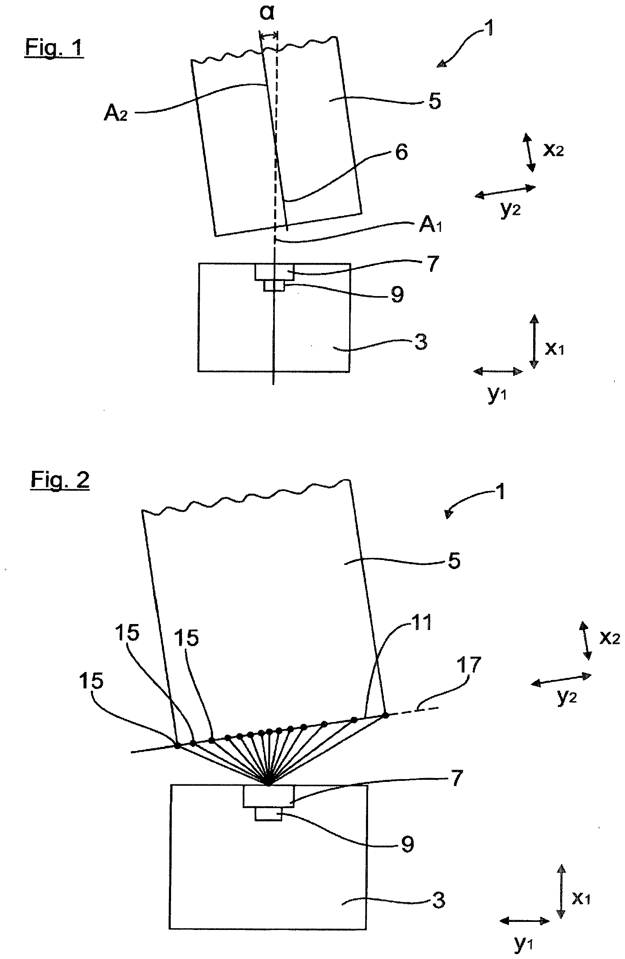

In Fig. 1 ist schematisch ein Nutzfahrzeug-Gespann 1 gezeigt, das ein Zugfahrzeug 3 und einen Anhänger/Auflieger 5 umfasst. Bei dem Zugfahrzeug 3 kann es sich beispielsweise um einen Sattelschlepper handeln, während der Anhänger/Auflieger 5 beispielsweise als Sattelauflieger ausgebildet sein kann. Bei der in Fig. 1 gezeigten Darstellung ist das Zugfahrzeug 3 derart zu dem Anhänger/Auflieger 5 angewinkelt, dass zwischen dem Zugfahrzeug 3 und dem Anhänger/Auflieger 5 ein relativer Gierwinkel α ausgebildet ist. Zur Verdeutlichung des relativen Gierwinkels α sind in Fig. 1 eine in Zugfahrzeug-Längsrichtung x₁ ausgerichtete Zugfahrzeug-Mittenlängsachse A₁ und eine in Anhänger/Auflieger-Längsrichtung x₂ ausgerichtete Anhänger/Auflieger-Mittenlängsachse A₂ gezeigt, deren Anwinkelung zueinander in einer durch die Fahrzeug-Längsrichtung x und die Fahrzeug-Querrichtung y gebildeten Horizontalebene den relativen Gierwinkel α ausbildet. Des Weiteren ist in Fig. 1 ein Drehpunkt 6 des Anhängers/Aufliegers 5 gezeigt. Dieser liegt auf der Anhänger/Auflieger-Mittenlängsachse A₂ und ist, hier lediglich beispielshaft, beabstandet von dem Schnittpunkt der Zugfahrzeug-Mittenlängsachse A₁ und der Anhänger/Auflieger-Mittenlängsachse A₂.

Wie in Fig. 1 gezeigt ist, weist das Zugfahrzeug 3 schematisch angedeuteten Laserscanner 7 auf, der signaltechnisch mit einer ebenfalls schematisch angedeuteten Datenverarbeitungseinrichtung 9 des Zugfahrzeuges 3 gekoppelt ist. Mittels des Laserscanners 7 und der Datenverarbeitungseinrichtung 9 können statische Kenngrößen des Nutzfahrzeug-Gespanns 1, hier beispielhaft die Breite und die Höhe des Anhängers/Aufliegers, und dynamische Kenngrößen des Nutzfahrzeug-Gespanns 1, hier beispielhaft der relative Gierwinkel α zwischen dem Zugfahrzeug 3 und dem Anhänger/Auflieger 5, ermittelt werden.

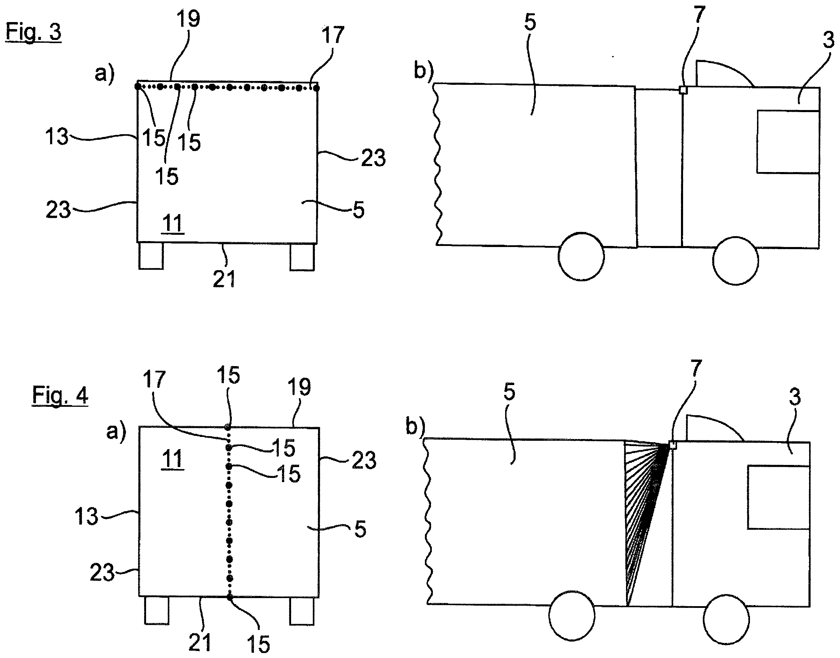

Der Laserscanner 7 ist, hier lediglich beispielhaft, als Ein-Zeilen-Laserscanner ausgebildet, wodurch von dem Laserscanner 7 ausgehende Laserstrahlen in einer einzelnen Messzeile bzw. Messebene angeordnet sind. Mittels des Laserscanners 7 können Positionen von Messpunkten, an denen die Laserstrahlen des Laserscanners 7 auf einen Körper treffen, ermittelt werden. Wie aus Fig. 2 hervorgeht, ist der Laserscanner 7 des Zugfahrzeugs 3, in Zugfahrzeug-Querrichtung y₁ gesehen, mittig an dem Zugfahrzeug 3 angeordnet und derart nach hinten ausgerichtet, das dessen Laserstrahlen auf eine, in Fahrzeug-Längsrichtung x gesehen, vordere Kopffläche 11 des Anhängers/Aufliegers 5 auftreffen. Die Kopffläche 11 des Anhängers/Aufliegers 5 ist plan ausgebildet und verläuft in Anhänger/Auflieger-Hochrichtung z₂ und in Anhänger/Auflieger-Querrichtung y₂. Zudem ist eine Außenkontur 13 der vorderen Kopffläche 11 (Fig. 3, Fig. 4) rechteckig ausgebildet. Aufgrund dieser Ausbildung der Kopffläche 11 kann mittels Messpunkten 15 des Laserscanners 7 eine in Anhänger/Auflieger-Querrichtung y₂ und/oder in Anhänger/Auflieger-Hochrichtung z₂ verlaufende Messgerade 17 approximiert werden. Das Approximieren der Messgerade 17 kann dabei beispielsweise mittels des RANSAC-Verfahrens oder mittels eines Verfahrens der linearen Regression erfolgen. Des Weiteren kann mittels des Laserscanners 7 auch die Position bzw. die räumliche Lage der Messgerade 17 ermittelt werden kann. Aus der Position der Messgerade 17 können mittels der Datenverarbeitungseinrichtung 9 die statischen und dynamischen Kenngrößen des Nutzfahrzeug-Gespanns 1 ermittelt werden.

Wie in Fig. 3 gezeigt ist, kann der Laserscanner 7, hier lediglich beispielhaft, derart angeordnet werden, dass die Messgerade 17 parallel zu einer in Anhänger/Auflieger-Querrichtung y₂ verlaufenden Oberkante 19 und ebenso parallel zu einer in Anhänger/Auflieger-Querrichtung y₂ verlaufenden Unterkante 21 einer Kopfflächen-Außenkontur 13 des Anhängers/Aufliegers 5 ausgerichtet ist. Wird die Messgerade 17 derart ausgerichtet, können die Breite des Anhängers/Aufliegers 5 und der relative Gierwinkel zwischen dem Zugfahrzeug 3 und dem Anhänger/Auflieger 5 auf besonders einfache Weise ermittelt werden.

Zur Ermittlung der Breite des Anhängers/Aufliegers 5 werden zunächst mittels des Laserscanners 7 die Positionen der beiden seitlichen Schnittpunkte zwischen in Anhänger/Auflieger-Hochrichtung z₂ verlaufenden Seitenkanten 23 der Kopfflächen-Außenkontur 13 und der Messgerade 17 ermittelt. Diese Schnittpunkte können beispielhaft durch diejenigen Messpunkte 15 des Laserscanners 7 approximiert werden, die am nächsten an den Seitenkanten 23 der Kopfflächen-Außenkontur 13 liegen. Aus dem geometrischen Zusammenhang der Positionen der seitlichen Schnittpunkte und der Position bzw. Ausrichtung des Laserscanners 7 am Zugfahrzeug 3 kann dann mittels der Datenverarbeitungseinrichtung 9 die Breite des Anhängers/Aufliegers 5 ermittelt werden.

Zur Ermittlung des relativen Gierwinkels zwischen dem Zugfahrzeug 3 und dem Anhänger/Auflieger 5 werden zunächst mittels des Laserscanners 7 die Positionen wenigstens zweier Messpunkte 15 auf der Messgerade 17, insbesondere die Positionen der beiden seitlichen Schnittpunkte zwischen den Seitenkanten 23 der Kopfflächen-Außenkontur 13 und der Messgerade 17, ermittelt. Aus dem geometrischen Zusammenhang der Positionen der wenigstens zwei Messpunkte 15 und der Position bzw. Ausrichtung des Laserscanners 7 am Zugfahrzeug 3 kann dann mittels der Datenverarbeitungseinrichtung 9 der relative Gierwinkel zwischen dem Zugfahrzeug 3 und dem Anhänger/Auflieger 5 ermittelt werden.

Wie in Fig. 4 gezeigt ist, kann der Laserscanner 7, hier lediglich beispielhaft, auch derart angeordnet werden, dass die Messgerade 17 parallel zu den Seitenkanten 23 der Kopfflächen-Außenkontur 13 des Anhängers/Aufliegers 5 ausgerichtet ist. Wird die Messgerade 17 derart angeordnet, kann die Höhe des Anhängers/Aufliegers 5 auf besonders einfache Weise ermittelt werden.

Zur Ermittlung der Höhe wird dabei zunächst mittels des Laserscanners 7 die Position eines, in Anhänger/Auflieger-Hochrichtung z₂ gesehen, oberen Schnittpunktes zwischen der Oberkante 19 der Kopfflächen-Außenkontur 13 und der Messgerade 17 ermittelt. Dieser Schnittpunkt kann beispielhaft durch denjenigen Messpunkt 15 des Laserscanners 7 approximiert werden, der am nächsten an der Oberkante 19 der Kopfflächen-Außenkontur 13 liegt. Aus dem geometrischen Zusammenhang der Position bzw. Lage des oberen Schnittpunktes und der Position bzw. Ausrichtung des Laserscanners 7 am Zugfahrzeug 3 kann dann mittels der Datenverarbeitungseinrichtung 9 die Höhe des Anhängers/Aufliegers 5 ermittelt werden.

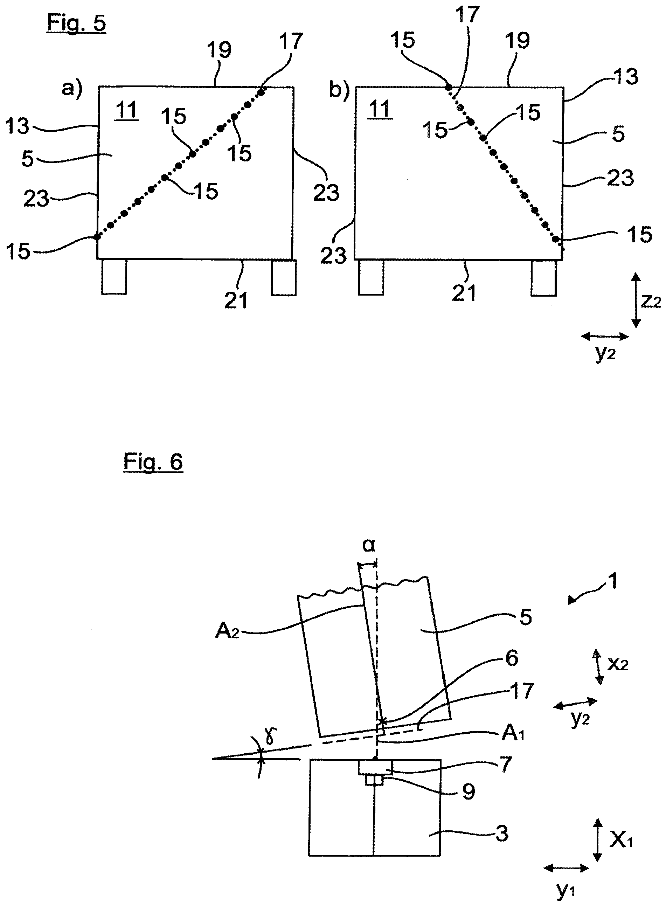

Wie in Fig. 5 gezeigt ist, kann der Laserscanner 7, hier lediglich beispielhaft, auch derart angeordnet werden, dass die Messgerade 17 sowohl die Oberkante 19 der Kopfflächen-Außenkontur 13 als auch eine Seitenkante 23 der Kopfflächen-Außenkontur 13 schneidet, so dass die Messgerade 17 mit einem definierten Winkel β zu der Unterkante 21 der Kopfflächen-Außenkontur 13 ausgerichtet ist. Wird die Messgerade 17 derart angeordnet, können der relative Gierwinkel zwischen dem Zugfahrzeug 3 und dem Anhänger/Auflieger 5, die Breite des Anhängers/Aufliegers 5 und die Höhe des Anhängers/Aufliegers 5 kombiniert ermittelt werden.

Zur Ermittlung des relativen Gierwinkels zwischen dem Zugfahrzeug 3 und dem Anhänger/Auflieger 5 können dabei beispielsweise zunächst mittels des Laserscanners 7 wenigstens mit einer definierten Abweichung die Positionen wenigstens zweier Messpunkte auf der Messgeraden 17, insbesondere die Positionen der Schnittpunkte zwischen der Oberkante 19 und der Messgerade 17 sowie zwischen der Seitenkante 23 und der Messgerade 17, ermittelt werden.. Aus dem geometrischen Zusammenhang der Positionen der wenigstens zwei Messpunkte und der Position bzw. Ausrichtung des Laserscanners 7 am Zugfahrzeug 3 kann dann mittels der Datenverarbeitungseinrichtung 9 der relative Gierwinkel zwischen dem Zugfahrzeug 3 und dem Anhänger/Auflieger 5 ermittelt werden. Konkret kann zur Ermittlung des relativen Gierwinkels aus den Positionsdaten der wenigstens zwei Messpunkte beispielsweise der in Fig. 6 gezeigte Winkel γ der Messgerade relativ zu einer durch die Zugfahrzeug-Querachse und die Zugfahrzeug-Hochachse gebildeten Vertikalebene ermittelt werden. (Anmerkung: Der Winkel γ entspricht dem relativen Gierwinkel α, wenn die Messgerade 17 parallel zu der Oberkante 19 und der Unterkante 21 der Kopfflächen-Außenkontur 13 ausgerichtet wird.)

Zur Ermittlung der Höhe des Anhängers/Aufliegers 5 wird zunächst mittels des Laserscanners 7 die Position eines, in Anhänger/Auflieger-Hochrichtung z₂ gesehen, oberen Schnittpunktes zwischen der Oberkante 19 der Kopfflächen-Außenkontur 13 und der Messgerade 17 ermittelt. Dieser Schnittpunkt kann beispielhaft durch denjenigen Messpunkte 15 des Laserscanners 7 approximiert werden, der am nächsten an der Oberkante 19 der Kopfflächen-Außenkontur 13 liegt. Aus dem geometrischen Zusammenhang des relativen Gierwinkels, der Position des oberen Schnittpunktes und der Position bzw. Ausrichtung des Laserscanners 7 am Zugfahrzeug 3 kann mittels der Datenverarbeitungseinrichtung 9 die Höhe des Anhängers/Aufliegers 5 ermittelt werden.

Zur Ermittlung der Breite des Anhängers/Aufliegers 5 wird zunächst mittels des Laserscanners 7 die Position eines seitlichen Schnittpunktes zwischen einer der Seitenkanten 23 der Kopfflächen-Außenkontur 13 und der Messgerade 17 ermittelt. Dieser Schnittpunkt kann beispielhaft durch denjenigen Messpunkt 15 des Laserscanners 7 approximiert werden, der am nächsten an der Seitenkante 23 der Kopfflächen-Außenkontur 13 liegt. Aus dem geometrischen Zusammenhang des relativen Gierwinkels, der Position des seitlichen Schnittpunktes und der Position bzw. Ausrichtung des Laserscanners 7 am Zugfahrzeug 3 kann dann mittels der Datenverarbeitungseinrichtung 9 die Breite des Anhängers/Aufliegers 5 ermittelt werden. Die Breite des Anhängers/Aufliegers 5 kann dabei jedoch nur zuverlässig und genau ermittelt werden, wenn die Kopffläche 11 des Anhängers/Aufliegers 5 symmetrisch zu einer durch die Anhänger/Auflieger-Mittenlängsachse A₂ und eine Anhänger/Auflieger-Hochachse gebildeten Vertikalebene ausgebildet und/oder angeordnet ist.

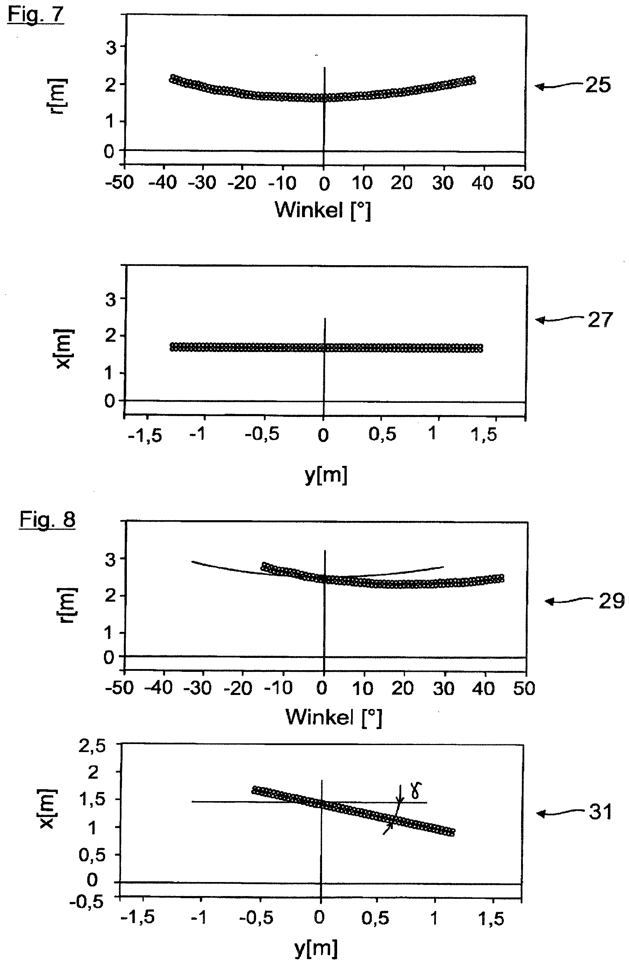

In Fig. 7 ist ein beispielhaftes Messergebnis des Laserscanners 7 gezeigt. Dabei sind in einem ersten Diagramm 25 und in einem zweiten Diagramm 27 die gemessenen Positionen der einzelnen Messpunkte 15 des Laserscanners 7 dargestellt. In dem ersten Diagramm 25 sind die Positionen der Messpunkte 15 in Polarkoordinaten dargestellt, während in dem zweiten Diagramm 27 die Positionen der Messpunkte 15 in kartesischen Koordinaten dargestellt sind. Die mittels der Messpunkte 15 approximierte Messgerade 17 verläuft bei dieser Messung parallel zu der Oberkante 19 und der Unterkante 21 der Kopfflächen-Außenkontur 13 des Anhängers/Aufliegers 5. Der relative Gierwinkel α zwischen dem Zugfahrzeug 3 und dem Anhänger/Auflieger 5 beträgt bei der Messung 0°.

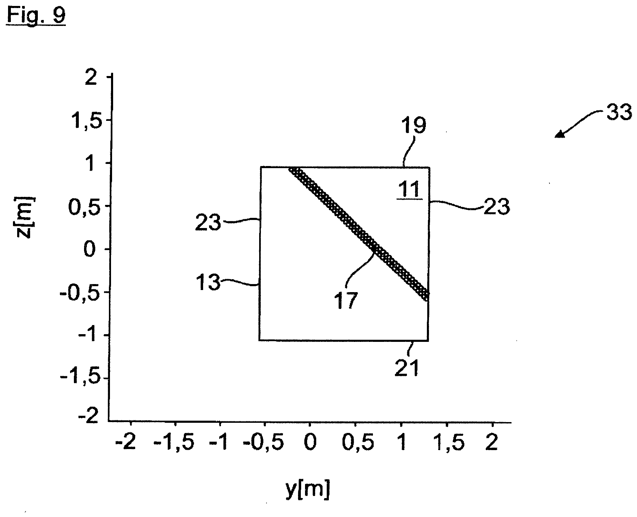

In den Fig. 8 und 9 ist ein weiteres beispielhaftes Messergebnis des Laserscanners 7 gezeigt. Dabei sind in einem dritten Diagramm 29, in einem vierten Diagramm 31 und in einem fünften Diagramm 33 wiederum die gemessenen Positionen der einzelnen Messpunkte 15 des Laserscanners 7 dargestellt. In dem dritten Diagramm 29 sind die Positionen der Messpunkte 15 in Polarkoordinaten dargestellt, während in dem vierten Diagramm 31 und in dem fünften Diagramm 33 die Positionen der Messpunkte 15 in kartesischen Koordinaten dargestellt sind. In dem vierten Diagramm 31 sind die Positionen der Messpunkte 15 dabei in x- und y- Koordinaten dargestellt, in dem fünften Diagramm 33 in z- und y-Koordinaten. Zudem ist bei dem fünften Diagramm 33 die Position der Kopfflächen-Außenkontur 13 eingeblendet. Die mittels der Messpunkte 15 approximierte Messgerade 17 verläuft bei dieser Messung mit einem Winkel β von -45° zu der Unterkante 21 der Kopfflächen-Außenkontur 13 des Anhängers/Aufliegers 5. Der relative Gierwinkel α zwischen dem Zugfahrzeug 3 und dem Anhänger/Auflieger 5 beträgt bei der Messung -30°. In dem Diagramm 31 ist zudem der bei dieser Messung auftretende, bereits erläuterte Winkel γ gezeigt.

### Bezugszeichenliste

- 1: Nutzfahrzeug-Gespann
- 3: Zugfahrzeug
- 5: Anhänger/Auflieger
- 6: Drehpunkt Anhänger/Auflieger
- 7: Laserscanner
- 9: Datenverarbeitungseinrichtung
- 11: Kopffläche
- 13: Außenkontur
- 15: Messpunkt
- 17: Messgerade bzw. Ausgleichsgerade der Messpunkte
- 19: Oberkante
- 21: Unterkante
- 23: Seitenkante
- 25: erstes Diagramm
- 27: zweites Diagramm
- 29: drittes Diagramm
- 31: viertes Diagramm
- 33: fünftes Diagramm
- A₁: Mitteniängsachse Zugfahrzeug
- A₂: Mittenlängsachse Anhänger/Auflieger
- α: relativer Gierwinkel
- β: Winkel zwischen Messgerade und Unterkante
- γ: Steigungswinkel der Messgerade

## Patentansprüche

1. Verfahren zur Unterstützung eines Fahrers eines Nutzfahrzeug-Gespanns, wobei ein Zugfahrzeug (3) des Nutzfahrzeug-Gespanns (1) eine optische Messeinrichtung (7) aufweist, mittels der die Position wenigstens einer auf einer, in Fahrzeug-Längsrichtung (x) gesehen, vorderen Kopffläche (11) eines Anhängers/Aufliegers (5) des Nutzfahrzeug-Gespanns (1) abbildbaren Messgerade (17) ermittelt wird, wobei aus der Position der Messgerade (17) wenigstens eine statische und/oder dynamische Kenngröße des Nutzfahrzeug-Gespanns (1) ermittelt wird, und wobei eine Außenkontur (13) der Kopffläche (11) im Wesentlichen rechteckförmig ausgebildet ist,
**dadurch gekennzeichnet,**
**dass** die Messgerade (17) parallel oder kongruent zu wenigstens einer in Fahrzeug-Hochrichtung (z) verlaufenden Hochkante (23) der Kopfflächen-Außenkontur (13) ausgerichtet wird, um die Höhe des Anhängers/Aufliegers (5) zu ermitteln,
und/oder
**dass** die Messgerade (17) derart ausgerichtet wird, dass sie sowohl eine in Fahrzeug-Querrichtung (y) verlaufende Querkante (19, 21) als auch eine in Fahrzeug-Hochrichtung (z) verlaufende Hochkante (23) der Kopfflächen-Außenkontur (13) schneidet, um den relativen Gierwinkel (α) zwischen Zugfahrzeug (3) und Anhänger/Auflieger (5) und/oder die Höhe des Anhängers/Aufliegers (5) und/oder die Breite des Anhängers/Aufliegers (5) zu ermitteln.

2. Verfahren nach Anspruch 1, **dadurch gekennzeichnet, dass** die Messgerade (17) derart ausgerichtet wird, dass sie sowohl eine Querkante (19, 21) als auch eine Hochkante (23) der Kopfflächen-Außenkontur (23) schneidet,
dass wenigstens mit einer definierten Abweichung die Positionen wenigstens zweier Messpunkte (15) auf der Messgeraden (17), insbesondere die Positionen der Schnittpunkte zwischen der Querkante (19, 21) und der Messgerade (17) sowie zwischen der Hochkante (23) und der Messgerade (17), ermittelt werden, und
dass aus dem geometrischen Zusammenhang der Positionen der wenigstens zwei Messpunkte (15) und der Position der optischen Messeinrichtung (7) am Zugfahrzeug (3) der relative Gierwinkel (α) zwischen Zugfahrzeug (3) und Anhänger/Auflieger (5) ermittelt wird.

3. Verfahren nach einem der vorhergehenden Ansprüche, **dadurch gekennzeichnet, dass** die Messgerade (17) derart ausgerichtet wird, dass sie sowohl eine, in Fahrzeug-Hochrichtung (z) gesehen, obere Querkante (19) als auch eine Hochkante (23) der Kopfflächen-Außenkontur (23) schneidet,
dass mittels der optischen Messeinrichtung (7) wenigstens mit einer definierten Abweichung die Position eines oberen Schnittpunktes zwischen der oberen Querkante (19) und der Messgerade (17) ermittelt wird, und
dass aus dem geometrischen Zusammenhang des relativen Gierwinkels (α), der Position des oberen Schnittpunktes und der Position der optischen Messeinrichtung (7) am Zugfahrzeug (3) die Höhe des Anhängers/Aufliegers (5) ermittelt wird.

4. Verfahren nach einem der vorhergehenden Ansprüche, **dadurch gekennzeichnet, dass** die Messgerade (17) derart ausgerichtet wird, dass sie sowohl eine Querkante (19, 21) als auch eine Hochkante (23) der Kopfflächen-Außenkontur (23) schneidet,
dass mittels der optischen Messeinrichtung (7) wenigstens mit einer definierten Abweichung die Position eines seitlichen Schnittpunktes zwischen einer Hochkante (23) und der Messgerade (17) ermittelt wird, und
dass aus dem geometrischen Zusammenhang des relativen Gierwinkels (α), der Position des seitlichen Schnittpunktes und der Position der optischen Messeinrichtung (7) am Zugfahrzeug (3) die Breite des Anhängers/Aufliegers (5) ermittelt wird.

5. Verfahren nach Anspruch 1, **dadurch gekennzeichnet, dass** die Messgerade (17) parallel oder kongruent zu wenigstens einer in Fahrzeug-Querrichtung (y) verlaufenden Querkante (19, 21), insbesondere Oberkante und/oder Unterkante, der Kopfflächen-Außenkontur (13) ausgerichtet wird, um die Breite des Anhängers/Aufliegers (5) und/oder den relativen Gierwinkel (α) zwischen Zugfahrzeug (3) und Anhänger/Auflieger (5) zu ermitteln.

6. Verfahren nach Anspruch 5, **dadurch gekennzeichnet, dass** die Messgerade (17) parallel oder kongruent zu wenigstens einer Querkante (19, 21) der Kopfflächen-Außenkontur (17) ausgerichtet wird,
dass mittels der optischen Messeinrichtung (7) wenigstens mit einer definierten Abweichung die Positionen der beiden seitlichen Schnittpunkte zwischen den beiden Hochkanten (19, 21) und der Messgerade (17) ermittelt wird, und
dass aus dem geometrischen Zusammenhang der Positionen der beiden seitlichen Schnittpunkte und der Position der optischen Messeinrichtung (7) am Zugfahrzeug (3) die Breite des Anhängers/Aufliegers (5) ermittelt wird.

7. Verfahren nach Anspruch 5 oder 6, **dadurch gekennzeichnet, dass** die Messgerade (17) parallel oder kongruent zu wenigstens einer Querkante (19, 21) der Kopfflächen-Außenkontur (17) ausgerichtet wird,
dass mittels der optischen Messeinrichtung (7) wenigstens mit einer definierten Abweichung die Positionen wenigstens zweier Messpunkte (15) auf der Messgeraden (17), insbesondere die Positionen der beiden seitlichen Schnittpunkte zwischen den beiden Hochkanten (23) und der Messgerade (17), ermittelt wird, und
dass aus dem geometrischen Zusammenhang der Positionen der wenigstens zwei Messpunkte (15) und der Position der optischen Messeinrichtung (7) am Zugfahrzeug (3) der relative Gierwinkel (α) zwischen Zugfahrzeug (3) und Anhänger/Auflieger (5) ermittelt wird.

8. Verfahren nach einem der vorhergehenden Ansprüche, **dadurch gekennzeichnet, dass** die Messgerade (17) parallel oder kongruent zu wenigstens einer Hochkante (23) der Kopfflächen-Außenkontur (13) ausgerichtet wird,
dass mittels der optischen Messeinrichtung (7) wenigstens mit einer definierten Abweichung die Position eines oberen Schnittpunktes zwischen einer, in Fahrzeug-Hochrichtung (z) gesehen, oberen Querkante (19) und der Messgerade (17) ermittelt wird, und
dass aus dem geometrischen Zusammenhang der Positionen des oberen Schnittpunktes und der Position der optischen Messeinrichtung (7) am Zugfahrzeug (3) die Höhe des Anhängers/Aufliegers (5) ermittelt wird.

9. Verfahren nach einem der vorhergehenden Ansprüche, **dadurch gekennzeichnet, dass** mittels der optischen Messeinrichtung (7) die Positionen wenigstens zweier Messpunkte (15) an der Kopffläche (11) des Anhängers/Aufliegers (5) ermittelt werden können, wobei die Messpunkte (15) derart angeordnet sind, dass mittels diesen die wenigstens eine Messgerade (17) approximiert und/oder ausgebildet werden kann, wobei bevorzugt vorgesehen ist, dass die Messgerade (17) mittels des RANSAC-Verfahrens und/oder mittels eines Verfahrens der linearen Regression approximiert wird.

10. Verfahren nach Anspruch 9, **dadurch gekennzeichnet, dass** jeder Hochkante (19, 21) des Anhängers/Aufliegers (5) jeweils ein Messpunkt (15) zugeordnet ist, und/oder dass jeder Querkante (23) des Anhängers/Aufliegers (5) jeweils ein Messpunkt (15) zugeordnet ist, und/oder dass einer Hochkante (19, 21) des Anhängers/Aufliegers (5) und einer Querkante (23) des Anhängers/Aufliegers (5) jeweils ein Messpunkt (15) zugeordnet ist.

11. Verfahren nach einem der Ansprüche 9 oder 10, **dadurch gekennzeichnet, dass** wenigstens ein Messpunkt (15) der optischen Messeinrichtung (17) in einem definierten Nahbereich im Bereich wenigstens einer Hochkante (23) des Anhängers/Aufliegers (5) angeordnet ist, und dass durch diesen Messpunkt ein Schnittpunkt zwischen der Hochkante (23) des Anhängers/Aufliegers (5) und der Messgerade (17) approximiert wird.

12. Verfahren nach einem der Ansprüche 9 bis 11, **dadurch gekennzeichnet, dass** wenigstens ein Messpunkt (15) der optischen Messeinrichtung (7) in einem definierten Nahbereich im Bereich wenigstens einer Querkante (19, 21) des Anhängers/Aufliegers (5) angeordnet ist, und dass durch diesen Messpunkt der Schnittpunkt zwischen der Querkante (19, 21) des Anhängers/Aufliegers (5) und der Messgerade (17) approximiert wird.

13. Nutzfahrzeug-Gespann mit einem Fahrerassistenzsystem, wobei ein Zugfahrzeug (3) des Nutzfahrzeug-Gespanns (1) eine optische Messeinrichtung (7) des Fahrerassistenzsystems aufweist, die dazu eingerichtet ist, wenigstens eine Messgerade (17) auf einer, in Fahrzeug-Längsrichtung (z) gesehen, vorderen Kopffläche (11) eines Anhängers/Aufliegers (5) des Nutzfahrzeug-Gespanns (1) abzubilden und die Position der Messgerade (17) zu ermitteln, wobei das Fahrerassistenzsystem eine Datenverarbeitungseinrichtung (9) aufweist, die dazu eingerichtet ist, aus der Position der Messgerade (17) wenigstens eine statische und/oder dynamische Kenngröße des Nutzfahrzeug-Gespanns (1) zu ermitteln, wobei eine Außenkontur (13) der Kopffläche im Wesentlichen rechteckförmig ausgebildet ist,
**dadurch gekennzeichnet, dass** die optische Messeinrichtung (7) derart ausgebildet und/oder angeordnet ist:
- dass die Messgerade (17) parallel oder kongruent zu wenigstens einer in Fahrzeug-Hochrichtung (z) verlaufenden Hochkante (23) der Kopfflächen-Außenkontur (13) ausgerichtet wird, um mittels der Datenverarbeitungseinrichtung (9) die Höhe des Anhängers/Aufliegers (5) zu ermitteln,
und/oder
- dass die Messgerade (17) sowohl eine in Fahrzeug-Querrichtung (y) verlaufende Querkante (19, 21) als auch eine in Fahrzeug-Hochrichtung (z) verlaufende Hochkante (23) der Kopfflächen-Außenkontur (13) schneidend ausgerichtet wird, um mittels der Datenverarbeitungseinrichtung (9) den relativen Gierwinkel (α) zwischen Zugfahrzeug (3) und Anhänger/Auflieger (5) und/oder die Höhe des Anhängers/Aufliegers (5) und/oder die Breite des Anhängers/Aufliegers (5) zu ermitteln.

14. Nutzfahrzeug-Gespann nach Anspruch 13, **dadurch gekennzeichnet, dass** die optische Messeinrichtung (7) und die Datenverarbeitungseinrichtung (9) derart ausgebildet sind, dass mittels diesen wenigstens mit einer definierten Abweichung die Position eines oberen Schnittpunktes zwischen der oberen Querkante (19) und der Messgerade (17) und/oder wenigstens mit einer definierten Abweichung die Position eines seitlichen Schnittpunktes zwischen einer Hochkante (23) und der Messgerade (17) ermittelbar ist.

15. Nutzfahrzeug-Gespann nach Anspruch 13 oder 14, **dadurch gekennzeichnet, dass** die optische Messeinrichtung (7) als 1-Zeilen-Laserscanner ausgebildet ist, und/oder dass die optische Messeinrichtung (7), in Fahrzeug-Längsrichtung (x) gesehen, derart nach hinten ausrichtbar ist, dass mittels dieser Positionen wenigstens zweier Messpunkte (15) an der Kopffläche (11) des Anhängers/Aufliegers (5) ermittelbar sind, wobei die Messpunkte (15) derart angeordnet sind, dass mittels diesen die wenigstens eine Messgerade approximierbar und/oder ausbildbar ist.

## Claims

1. Method for supporting a driver of a commercial vehicle trailer combination, wherein a tractor vehicle (3) of the commercial vehicle trailer combination (1) comprises an optical measurement device (7) by means of which the position of at least one measurement line (17) that can be formed on a front top surface (11) of a trailer/semitrailer (5) of the commercial vehicle trailer combination (1) when viewed in the vehicle's longitudinal direction (x) is determined, wherein at least one static and/or dynamic characteristic variable of the commercial vehicle trailer combination (1) is determined from the position of the measurement line (17), and wherein an external contour (13) of the top surface (11) is of essentially rectangular form,
**characterized in that**
the measurement line (17) is oriented parallel to or congruent with at least one vertical edge (23) of the external contour of the top surface (13) extending in the vehicle's vertical direction (z), in order to determine the height of the trailer/semitrailer (5),
and/or
the measurement line (17) is oriented such that it intersects both a transverse edge (19, 21), extending in the vehicle's lateral direction (y), as well as a vertical edge (23), extending in the vehicle's vertical direction (z), of the external contour of the top surface (13) in order to determine the relative yaw angle (α) between the tractor vehicle (3) and the trailer/semitrailer (5) and/or the height of the trailer/semitrailer (5) and/or the width of the trailer/semitrailer (5).

2. Method according to Claim 1, **characterized in that** the measurement line (17) is oriented such that it intersects both a transverse edge (19, 21) as well as a vertical edge (23) of the external contour of the top surface (23),
the positions of at least two measurement points (15) on the measurement line (17), in particular the positions of the points of intersection between the transverse edge (19, 21) and the measurement line (17) as well as between the vertical edge (23) and the measurement line (17), are determined at least with a defined error, and
the relative yaw angle (α) between the tractor vehicle (3) and the trailer/semitrailer (5) is determined from the geometric relationship of the positions of the at least two measurement points (15) and the position of the optical measurement device (7) on the tractor vehicle (3).

3. Method according to any one of the preceding claims, **characterized in that** the measurement line (17) is oriented such that it intersects both an upper transverse edge (19) when viewed in the vehicle's vertical direction (z) as well as a vertical edge (23) of the external contour of the top surface (23),
the position of an upper point of intersection between the upper transverse edge (19) and the measurement line (17) is determined by means of the optical measurement device (7) at least with a defined error, and
the height of the trailer/semitrailer (5) is determined from the geometric relationship of the relative yaw angle (α), the position of the upper point of intersection and the position of the optical measurement device (7) on the tractor vehicle (3).

4. Method according to any one of the preceding claims, **characterized in that** the measurement line (17) is oriented such that it intersects both a transverse edge (19, 21) as well as a vertical edge (23) of the external contour of the top surface (23),
the position of a lateral point of intersection between a vertical edge (23) and the measurement line (17) is determined by means of the optical measurement device (7) at least with a defined error, and
the width of the trailer/semitrailer (5) is determined from the geometric relationship of the relative yaw angle (α), the position of the lateral point of intersection and the position of the optical measurement device (7) on the tractor vehicle (3).

5. Method according to Claim 1, **characterized in that** the measurement line (17) is oriented parallel to or congruent with at least one transverse edge (19, 21) extending in the vehicle's lateral direction (y), in particular an upper edge and/or a lower edge of the external contour of the top surface (13), in order to determine
the width of the trailer/semitrailer (5) and/or the relative yaw angle (α) between the tractor vehicle (3) and the trailer/semitrailer (5).

6. Method according to Claim 5, **characterized in that** the measurement line (17) is oriented parallel to or congruent with at least one transverse edge (19, 21) of the external contour of the top surface (17),
the positions of the two lateral points of intersection between the two vertical edges (19, 21) and the measurement line (17) is determined by means of the optical measurement device (7) at least with a defined error, and
the width of the trailer/semitrailer (5) is determined from the geometric relationship of the positions of the two lateral points of intersection and the position of the optical measurement device (7) on the tractor vehicle (3).

7. Method according to Claim 5 or 6, **characterized in that** the measurement line (17) is oriented parallel to or congruent with at least one transverse edge (19, 21) of the external contour of the top surface (17),
the positions of at least two measurement points (15) on the measurement line (17), in particular the positions of the two lateral points of intersection between the two vertical edges (23) and the measurement line (17), is determined by means of the optical measurement device (7) at least with a defined error, and
the relative yaw angle (α) between the tractor vehicle (3) and the trailer/semitrailer (5) is determined from the geometric relationship of the positions of the at least two measurement points (15) and the position of the optical measurement device (7) on the tractor vehicle (3).

8. Method according to any one of the preceding claims, **characterized in that** the measurement line (17) is oriented parallel to or congruent with at least one vertical edge (23) of the external contour of the top surface (13),
the position of an upper point of intersection between an upper transverse edge (19) when viewed in the vehicle's vertical direction (z) and the measurement line (17) is determined by means of the optical measurement device (7) at least with a defined error, and
the height of the trailer/semitrailer (5) is determined from the geometric relationship of the positions of the upper points of intersection and the position of the optical measurement device (7) on the tractor vehicle (3).

9. Method according to any one of the preceding claims, **characterized in that** the positions of at least two measurement points (15) on the top surface (11) of the trailer/semitrailer (5) can be determined by means of the optical measurement device (7), wherein the measurement points (15) are disposed such that the at least one measurement line (17) can be approximated and/or formed by means of said measurement points (15), wherein it is preferably provided that the measurement line (17) is approximated by means of the RANSAC method and/or by means of a linear regression method.

10. Method according to Claim 9, **characterized in that** each vertical edge (19, 21) of the trailer/semitrailer (5) is associated with a measurement point (15) and/or each transverse edge (23) of the trailer/semitrailer (5) is associated with a measurement point (15) and/or that a vertical edge (19, 21) of the trailer/semitrailer (5) and a transverse edge (23) of the trailer/semitrailer (5) is each associated with a measurement point (15).

11. Method according to either one of Claims 9 and 10, **characterized in that** at least one measurement point (15) of the optical measurement device (17) is disposed within a defined proximity of at least one vertical edge (23) of the trailer/semitrailer (5) and a point of intersection between the vertical edge (23) of the trailer/semitrailer (5) and the measurement line (17) is approximated by said measurement point.

12. Method according to any one of Claims 9 to 11, **characterized in that** at least one measurement point (15) of the optical measurement device (7) is within a defined proximity of at least one transverse edge (19, 21) of the trailer/semitrailer (5), and that the point of intersection between the transverse edge (19, 21) of the trailer/semitrailer (5) and the measurement line (17) is approximated by said measurement point.

13. Commercial vehicle trailer combination having a driver assistance system, wherein a tractor vehicle (3) of the commercial vehicle trailer combination (1) comprises an optical measurement device (7) of the driver assistance system, which optical measurement device is configured to form at least one measurement line (17) on a front top surface (11) of a trailer/semitrailer (5) of the commercial vehicle trailer combination (1) when viewed in the vehicle's longitudinal direction (z) and to determine the position of the measurement line (17), wherein the driver assistance system has a data processing device (9) which is configured to determine at least one static and/or dynamic characteristic variable of the commercial vehicle trailer combination (1) from the position of the measurement line (17), wherein an external contour (13) of the top surface is essentially of rectangular form,
**characterized in that** the optical measurement device (7) is designed and/or arranged such that:
- the measurement line (17) is oriented parallel to or congruent with at least one vertical edge (23) of the external contour of the top surface (13) extending in the vehicle's vertical direction (z), in order to determine the height of the trailer/semitrailer (5) by means of the data processing device (9),
and/or
- the measurement line (17) is oriented to intersect both a transverse edge (19, 21), extending in the vehicle's lateral direction (y), as well as a vertical edge (23), extending in the vehicle's vertical direction (z), of the external contour of the top surface (13) in order to determine the relative yaw angle (α) between the tractor vehicle (3) and the trailer/semitrailer (5) and/or the height of the trailer/semitrailer (5) and/or the width of the trailer/semitrailer (5) by means of the data processing device (9).

14. Commercial vehicle trailer combination according to Claim 13, **characterized in that** the optical measurement device (7) and the data processing device (9) are designed such that by means of the same the position of an upper point of intersection between the upper transverse edge (19) and the measurement line (17) can be determined at least with a defined error and/or the position of a lateral point of intersection between a vertical edge (23) and the measurement line (17) can be determined at least with a defined error.

15. Commercial vehicle trailer combination according to Claim 13 or 14, **characterized in that** the optical measurement device (7) is in the form of a 1-line laser scanner, and/or the optical measurement device (7), when viewed in the vehicle's longitudinal direction (x), can be oriented rearwards such that by means of the same the positions of at least two measurement points (15) on the top surface (11) of the trailer/semitrailer (5) can be determined, wherein the measurement points (15) are disposed such that the at least one measurement line can be approximated and/or formed by means of said measurement points.

## Revendications

1. Procédé d'assistance d'un conducteur d'un attelage de véhicule utilitaire, un véhicule utilitaire (3) de l'attelage de véhicule utilitaire (1) possédant un dispositif de mesure optique (7) au moyen duquel est déterminée la position d'au moins une droite de mesure (17) qui peut être représentée sur une surface de tête (11) avant, vue dans la direction longitudinale du véhicule (x), d'une remorque/semi-remorque (5) de l'attelage de véhicule utilitaire (1), au moins une grandeur caractéristique statique et/ou dynamique de l'attelage de véhicule utilitaire (1) étant déterminée à partir de la position de la droite de mesure (17) et un contour extérieur (13) de la surface de tête (11) étant de configuration sensiblement rectangulaire,
**caractérisé en ce**
**que** la droite de mesure (17) est orientée parallèlement ou de manière congruente par rapport à au moins une arête verticale (23) du contour extérieur de la surface de tête (13) qui s'étend dans le sens de la hauteur (z) du véhicule, afin de déterminer la hauteur de la remorque/semi-remorque (5),
et/ou
**que** la droite de mesure (17) est orientée de telle sorte qu'elle croise à la fois une arête transversale (19, 21) qui s'étend dans le sens transversal (y) du véhicule et une arête verticale (23) du contour extérieur de la surface de tête (13) qui s'étend dans le sens de la hauteur (z) du véhicule, afin de déterminer l'angle de lacet relatif (α) entre le tracteur (3) et la remorque/semi-remorque (5) et/ou la hauteur de la remorque/semi-remorque (5) et/ou la largeur de la remorque/semi-remorque (5).

2. Procédé selon la revendication 1, **caractérisé en ce que** la droite de mesure (17) est orientée de telle sorte qu'elle croise à la fois une arête transversale (19, 21) et une arête verticale (23) du contour extérieur de la surface de tête (13),
**en ce que** les positions d'au moins deux points de mesure (15) sur les droites de mesure (17), notamment les positions des points d'intersection entre l'arête transversale (19, 21) et la droite de mesure (17) ainsi qu'entre l'arête verticale (23) et la droite de mesure (17), sont déterminées au moins avec un écart défini, et
**en ce que** l'angle de lacet relatif (α) entre le tracteur (3) et la remorque/semi-remorque (5) est déterminé à partir de la relation géométrique des positions des au moins deux points de mesure (15) sur les droites de mesure (17) et de la position du dispositif de mesure optique (7) sur le tracteur (3).

3. Procédé selon l'une des revendications précédentes, **caractérisé en ce que** la droite de mesure (17) est orientée de telle sorte qu'elle croise à la fois, vue dans le sens de la hauteur (z) du véhicule, une arête transversale supérieure (19) et une arête verticale (23) du contour extérieur de la surface de tête (13),
**en ce que** la position d'un point d'intersection supérieur entre l'arête transversale supérieure (19) et la droite de mesure (17) est déterminée au moyen du dispositif de mesure optique (7) au moins avec un écart défini, et
**en ce que** la hauteur de la remorque/semi-remorque (5) est déterminée à partir de la relation géométrique de l'angle de lacet relatif (α), de la position du point d'intersection supérieur et de la position du dispositif de mesure optique (7) sur le tracteur (3).

4. Procédé selon l'une des revendications précédentes, **caractérisé en ce que** la droite de mesure (17) est orientée de telle sorte qu'elle croise à la fois une arête transversale (19, 21) et une arête verticale (23) du contour extérieur de la surface de tête (13),
**en ce que** la position d'un point d'intersection latéral entre une arête verticale (23) et la droite de mesure (17) est déterminée au moyen du dispositif de mesure optique (7) au moins avec un écart défini, et
**en ce que** la largeur de la remorque/semi-remorque (5) est déterminée à partir de la relation géométrique de l'angle de lacet relatif (α), de la position du point d'intersection latéral et de la position du dispositif de mesure optique (7) sur le tracteur (3).

5. Procédé selon la revendication 1, **caractérisé en ce que** la droite de mesure (17) est orientée parallèlement ou de manière congruente par rapport à au moins une arête transversale (19, 21) qui s'étend dans le sens transversal (y) du véhicule, notamment une arête supérieure et/ou une arête inférieure, de la surface de tête (13), afin de déterminer la largeur de la remorque/semi-remorque (5) et/ou l'angle de lacet relatif (α) entre le tracteur (3) et la remorque/semi-remorque (5).

6. Procédé selon la revendication 5, **caractérisé en ce que** la droite de mesure (17) est orientée parallèlement ou de manière congruente par rapport à au moins une arête transversale (19, 21) du contour extérieur de la surface de tête (17),
**en ce que** les positions des deux points d'intersection latéraux entre les deux arêtes verticales (19, 21) et la droite de mesure (17) sont déterminées au moyen du dispositif de mesure optique (7) au moins avec un écart défini, et
**en ce que** la largeur de la remorque/semi-remorque (5) est déterminée à partir de la relation géométrique des positions des deux points d'intersection latéraux et de la position du dispositif de mesure optique (7) sur le tracteur (3).

7. Procédé selon la revendication 5 ou 6, **caractérisé en ce que** la droite de mesure (17) est orientée parallèlement ou de manière congruente par rapport à au moins une arête transversale (19, 21) du contour extérieur de la surface de tête (17), **en ce que** les positions d'au moins deux points de mesure (15) sur les droites de mesure (17), notamment les positions des deux points d'intersection latéraux entre les deux arêtes verticales (23) et la droite de mesure (17), sont déterminées au moyen du dispositif de mesure optique (7) au moins avec un écart défini, et
**en ce que** l'angle de lacet relatif (α) entre le tracteur (3) et la remorque/semi-remorque (5) est déterminé à partir de la relation géométrique des positions des au moins deux points de mesure (15) et de la position du dispositif de mesure optique (7) sur le tracteur (3).

8. Procédé selon l'une des revendications précédentes, **caractérisé en ce que** la droite de mesure (17) est orientée parallèlement ou de manière congruente par rapport à au moins une arête verticale (23) du contour extérieur de la surface de tête (13),
**en ce que** la position d'un point d'intersection supérieur entre une arête transversale (19), vue dans le sens de la hauteur (z) du véhicule, et la droite de mesure (17) est déterminée au moyen du dispositif de mesure optique (7) au moins avec un écart défini, et
**en ce que** la hauteur de la remorque/semi-remorque (5) est déterminée à partir de la relation géométrique des positions du point d'intersection supérieur et de la position du dispositif de mesure optique (7) sur le tracteur (3).

9. Procédé selon l'une des revendications précédentes, **caractérisé en ce que** les positions d'au moins deux points de mesure (15) sur la surface de tête (11) de la remorque/semi-remorque (5) peuvent être déterminées au moyen du dispositif de mesure optique (7), les points de mesure (15) étant disposés de telle sorte qu'au moins une droite de mesure (17) peut être définie approximativement et/ou formée au moyen de ceux-ci, en prévoyant de préférence que la droite de mesure (17) est définie approximativement au moyen du procédé RANSAC et/ou au moyen d'un procédé de régression linéaire.

10. Procédé selon la revendication 9, **caractérisé en ce qu'**un point de mesure (15) est respectivement associé à chaque arête verticale (19, 21) de la remorque/semi-remorque (5), et/ou **en ce qu'**un point de mesure (15) est respectivement associé à chaque arête transversale (23) de la remorque/semi-remorque (5), et/ou **en ce qu'**un point de mesure (15) est respectivement associé à une arête verticale (19, 21) de la remorque/semi-remorque (5) et à une arête transversale (23) de la remorque/semi-remorque (5).

11. Procédé selon l'une des revendications 9 ou 10, **caractérisé en ce qu'**au moins un point de mesure (15) du dispositif de mesure optique (17) est disposé dans une zone de proximité définie dans la zone d'au moins une arête verticale (23) de la remorque/semi-remorque (5), et **en ce qu'**un point d'intersection entre l'arête verticale (23) de la remorque/semi-remorque (5) et la droite de mesure (17) est défini approximativement par ce point de mesure.

12. Procédé selon l'une des revendications 9 à 11, **caractérisé en ce qu'**au moins un point de mesure (15) du dispositif de mesure optique (7) est disposé dans une zone de proximité définie dans la zone d'au moins une arête transversale (19, 21) de la remorque/semi-remorque (5), et **en ce que** le point d'intersection entre l'arête transversale (19, 21) de la remorque/semi-remorque (5) et la droite de mesure (17) est défini approximativement par ce point de mesure.

13. Attelage de véhicule utilitaire comprenant un système d'assistance au conducteur, un tracteur (3) de l'attelage de véhicule utilitaire (1) possédant un dispositif de mesure optique (7) du système d'assistance au conducteur, lequel est configuré pour représenter une droite de mesure (17) sur une surface de tête (11) avant, vue dans la direction longitudinale du véhicule (x), d'une remorque/semi-remorque (5) de l'attelage de véhicule utilitaire (1) et pour déterminer la position de la droite de mesure (17), le système d'assistance au conducteur possédant un dispositif de traitement de données (9) qui est conçu pour déterminer au moins une grandeur caractéristique statique et/ou dynamique de l'attelage de véhicule utilitaire (1) à partir de la position de la droite de mesure (17), un contour extérieur (13) de la surface de tête étant de configuration sensiblement rectangulaire,
**caractérisé en ce que** le dispositif de mesure optique (7) est configuré et/ou disposé de telle sorte :
- que la droite de mesure (17) est orientée parallèlement ou de manière congruente par rapport à au moins une arête verticale (23) du contour extérieur de la surface de tête (13) qui s'étend dans le sens de la hauteur (z) du véhicule, afin de déterminer la hauteur de la remorque/semi-remorque (5) au moyen du dispositif de traitement de données (9),
et/ou
- que la droite de mesure (17) est orientée de telle sorte qu'elle croise à la fois une arête transversale (19, 21) qui s'étend dans le sens transversal (y) du véhicule et une arête verticale (23) du contour extérieur de la surface de tête (13) qui s'étend dans le sens de la hauteur (z) du véhicule, afin de déterminer au moyen du dispositif de traitement de données (9) l'angle de lacet relatif (α) entre le tracteur (3) et la remorque/semi-remorque (5) et/ou la hauteur de la remorque/semi-remorque (5) et/ou la largeur de la remorque/semi-remorque (5).

14. Attelage de véhicule utilitaire selon la revendication 13, **caractérisé en ce que** le dispositif de mesure optique (7) et le dispositif de traitement de données (9) sont configurés de telle sorte que la position d'un point d'intersection supérieur entre l'arête transversale supérieure (19) et la droite de mesure (17), au moins avec un écart défini, et/ou la position d'un point d'intersection latéral entre une arête verticale (23) et la droite de mesure (17), au moins avec un écart défini, peuvent être déterminées au moyen de ceux-ci.

15. Attelage de véhicule utilitaire selon la revendication 13 ou 14, **caractérisé en ce que** le dispositif de mesure optique (7) est réalisé sous la forme d'un dispositif de balayage laser à 1 ligne et/ou **en ce que** le dispositif de mesure optique (7), vu dans la direction longitudinale du véhicule (x), peut être orienté vers l'arrière de telle sorte que les positions d'au moins deux points de mesure (15) sur la surface de tête (11) de la remorque/semi-remorque (5) peuvent être déterminées au moyen de celui-ci, les points de mesure (15) étant disposés de telle sorte que l'au moins une droite de mesure peut être définie approximativement et/ou formée au moyen de ceux-ci.
